Europäisches Patentamt

European Patent Office

Office européen des brevets

(11) Numéro de publication : **0 461 973 A1**

# (12) DEMANDE DE BREVET EUROPEEN

(21) Numéro de dépôt : **91401509.4**

(22) Date de dépôt : **10.06.91**

(51) Int. Cl.⁵ : **F16L 33/02**

(30) Priorité : **13.06.90 FR 9007369**

(43) Date de publication de la demande :
**18.12.91 Bulletin 91/51**

(84) Etats contractants désignés :
**AT BE CH DE DK ES FR GB GR IT LI LU NL SE**

(71) Demandeur : **Etablissements CAILLAU**
**28, rue Ernest Renan**
**F-92130 Issy-les-Moulineaux (FR)**

(72) Inventeur : **Andre, Michel**
**140, rue du 8 Mai**
**F-41200 Romorantin Lanthenay (FR)**
Inventeur : **Calmettes, Lionel**
**84, Faubourg d'Orléans**
**F-41200 Romorantin Lanthenay (FR)**

(74) Mandataire : **Descourtieux, Philippe et al**
**CABINET BEAU de LOMENIE 55 rue**
**d'Amsterdam**
**F-75008 Paris (FR)**

(54) **Collier de serrage et son procédé de fabrication.**

(57)    Collier de serrage constitué par une bande de métal (1) enroulée sur elle-même, des moyens complémentaires de serrage et d'agrafage (2-3) étant disposés au voisinage des extrémités de la bande, cependant que le brin intérieur de la bande présente un prolongement (1a) s'étendant, avant le serrage du collier, au-dessous du brin extérieur et au-delà du moyen d'agrafage qu'il comporte. Le prolongement (1a) présente sur ses bords longitudinaux deux pattes (4a-4b), en regard l'une de l'autre faisant saillie vers l'extérieur du collier et serrées sur les bords longitudinaux du brin extérieur de la bande avant la fermeture du collier.

fig.1

EP 0 461 973 A1

On connaît déjà, notamment par le brevet européen EP-A-3192, un collier de serrage constitué par une bande métallique enroulée sur elle-même, dont les extrémités comportent des moyens complémentaires de serrage et d'agrafage. L'un de ces moyens est généralement constitué par une oreille radialement saillante, tandis que l'autre est en forme de crochet, susceptible de passer par-dessus l'oreille au cours du serrage du collier pour s'agrafer ensuite derrière elle et maintenir ainsi le serrage du collier.

La plupart des colliers de ce type présentent, d'autre part, un prolongement du brin intérieur de la bande qui s'étend, avant le serrage du collier, au-dessous du brin extérieur et au-delà du moyen d'agrafage qu'il comporte. Ainsi qu'on le sait, ce prolongement est destiné à assurer, avant serrage du collier mais surtout après serrage, la continuité de la surface intérieure du collier, ce qui permet d'exercer une pression uniforme sur les objets à serrer, tels par exemple que des tuyaux souples emmanchés sur des tubes ou embouts rigides.

On a déjà proposé, notamment par les brevets européens EP-A-79252 et EP-A-236217, de disposer, sur le prolongement du brin intérieur de la bande, des moyens permettant de limiter l'ouverture d'un collier avant sa mise en place et également d'empêcher l'enchevêtrement d'un lot de colliers au cours de son transport et de sa manipulation. D'une façon générale, ces moyens connus assurent le "préclipsage" d'un collier et facilitent généralement l'utilisation et le serrage du collier après sa mise en place.

Toutefois, les moyens connus pour le "préclipsage" d'un collier ne répondent pas toujours aux diverses exigences dimensionnelles des utilisateurs, notamment des constructeurs de véhicules automobiles et en outre, dans certains cas, peuvent endommager la surface de l'objet, tel qu'un tuyau souple en caoutchouc, sur lequel ils sont serrés.

Enfin on connaît par le brevet DE-C-3.122.656 un collier dont les deux brins, intérieur et extérieur, doivent être maintenus au voisinage l'un de l'autre dans la zone de chevauchement après serrage du collier. A cet effet, il est prévu une agrafe rapportée et soudée transversalement sur le brin intérieur, et les extrémités de l'agrafe sont repliées au dessus du brin extérieur. Cette agrafe doit cependant permettre un coulissement facile des deux brins l'un par rapport à l'autre.

La présente invention a donc pour objet de proposer un collier de serrage du type décrit dans les trois brevets européens précités, comportant des moyens de préclipsage faciles à réaliser et peu onéreux, ces moyens évitant les inconvénients de ceux proposés antérieurement.

Selon l'invention, le prolongement du brin intérieur de la bande métallique présente sur ses bords longitudinaux deux pattes, en regard l'une de l'autre, lesdites pattes formant coprs avec la bande, faisant saillie vers l'extérieur du collier et étant serrées sur les bords longitudinaux du brin extérieur de la bande, avant la fermeture du collier par coopération des moyens complémentaires d'agrafage.

L'invention a également pour objet un procédé pour la fabrication du collier perfectionné. Selon ce procédé, deux protubérances latérales sont tout d'abord obtenues par matriçage dans l'épaisseur du prolongement du brin intérieur et par refoulement du métal, ces deux protubérances étant ensuite cambrées et, après enroulement de la bande, serrées sur le brin extérieur au-delà du moyen d'agrafage qu'il comporte.

L'invention sera mieux comprise et diverses caractéristiques secondaires ainsi que ses avantages apparaîtront au cours de la description qui va suivre en référence au dessin annexé, dans lequel :

La figure 1 est une vue en élévation d'un collier selon l'invention.

La figure 2 est une vue en coupe suivant II-II de la figure 1.

La figure 3 est une vue partielle, en perspective, de l'extrémité du prolongement du brin intérieur de la bande.

Si l'on se reporte au dessin, on voit un collier de serrage constitué par une bande métallique 1, enroulée sur elle-même, l'extrémité du brin extérieur comportant un crochet 2 susceptible d'être agrafé derrière une oreille 3 prévue au voisinage de l'extrémité du brin intérieur. Au-delà de l'oreille 3, le brin intérieur de la bande présente un prolongement 1a qui s'étend, à l'état non serré du collier représenté au dessin, au-delà du crochet 2 sous le brin extérieur de la bande. Un tel collier ainsi que ses avantages ont été décrits notamment dans le brevet EP-A-3192. "

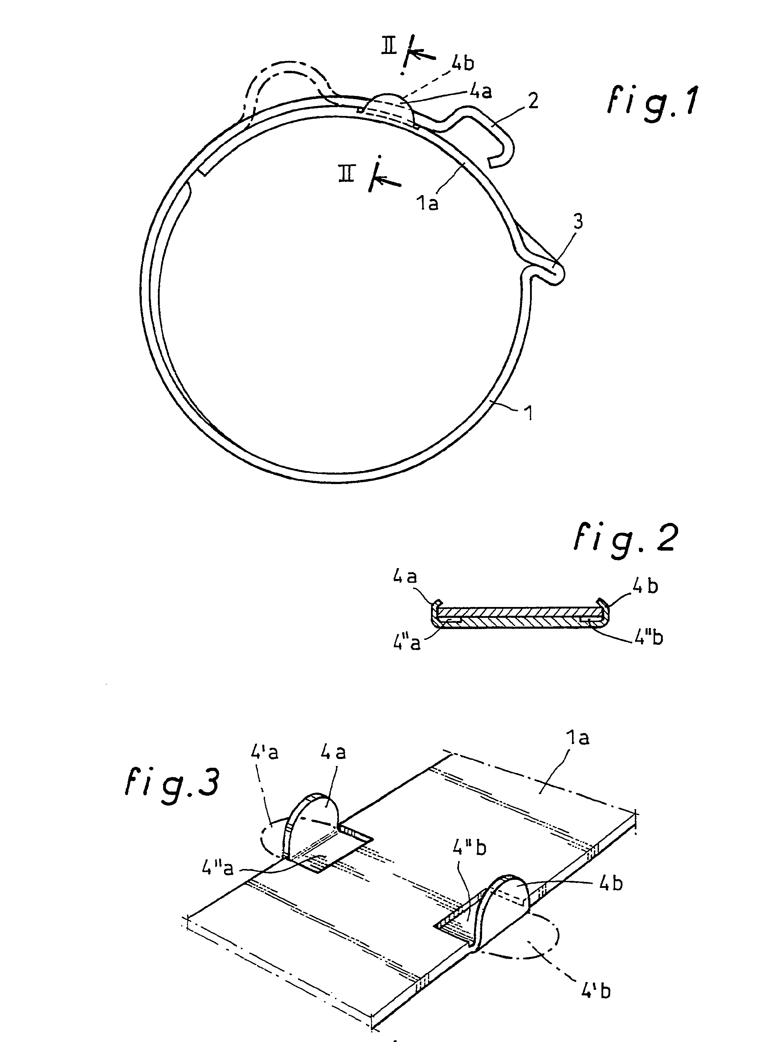

Le prolongement 1a présente deux pattes 4a et 4b, disposées sur ses bords longitudinaux et bien visibles sur les figures 2 et 3. Ces deux pattes, formant corps avec le prolongement 1a, sont situées en regard l'une de l'autre et font saillie radialement vers l'extérieur du collier.

A l'état non fermé du collier, tel qu'il est représenté au dessin, les pattes 4a et 4b sont serrées sur les bords longitudinaux du brin extérieur et, de préférence, légèrement recourbées sur ces derniers ainsi qu'on le voit bien sur la figure 2.

Grâce à ces dispositions, le brin intérieur et le brin extérieur de la bande sont liés l'un à l'autre d'une façon suffisante pour que le diamètre du collier non serré ne risque pas d'être modifié tant au cours du transport sur les lieux d'utilisation que pendant sa mise en place sur l'objet à serrer. De plus, il est évident que deux ou plusieurs colliers d'un même lot ne peuvent pas s'enchevêtrer, ce qui facilite leur utilisation.

Ainsi qu'on le sait, après sa mise en place, un collier est serré au moyen d'un outil du genre pince qui rapproche le crochet 2 de l'oreille 3 et le fait passer par-dessus celle-ci derrière laquelle il s'agrafe. Au cours de cette opération, le brin intérieur de la bande **1** glisse sous le brin extérieur et le mouvement n'est nullement empêché par les pattes **4a** et **4b** qui, à aucun moment, ne sont en contact avec l'objet à serrer.

Si le brin extérieur de la bande comporte une ou plusieurs réserves de capacité, du genre de celles décrites par le brevet FR-A-2 470 275 ou par la demande de brevet français N° 90 06477 déposée le 23 mai 1990 par la demanderesse (une telle "réserve de capacité" a été représentée en trait ponctué sur la figure 1), les pattes **4a** et **4b** seront légèrement redressées au cours du serrage du collier par rapport à la forme, visible sur la figure 2, qu'elles présentent avant le serrage. Ce phénomène ne présente évidemment aucun inconvénient.

Les pattes **4a** et **4b** peuvent être obtenues par différents moyens mais l'invention propose à cet égard un procédé de fabrication simple et peu onéreux.

Au cours des opérations de conformation de la bande **1** et de ses extrémités, on procède, dans la zone destinée à constituer le prolongement **1a**, à deux matriçages des bords longitudinaux en des régions en regard l'une de l'autre.

Le métal est repoussé et fait apparaître deux protubérances latérales **4'a** et **4'b**, visibles en trait ponctué sur la figure 3, tout en laissant subsister des lamages **4"a** et **4"b** dans l'épaisseur de la bande.

Au cours d'une phase ultérieure de la fabrication du collier, et en tout cas après enroulement de la bande **1** sur elle-même lorsque le brin extérieur recouvre le prolongement **1a** du brin intérieur, les protubérances **4'a** et **4'b** sont cambrées et serrées sur les bords longitudinaux du brin extérieur pour constituer les pattes **4a** et **4b** ; ces dernières sont enfin légèrement recourbées au-dessus du brin extérieur ainsi que cela est bien visible sur la figure 2. Bien évidemment après leur serrage sur le brin extérieur de la bande, les pattes **4a**, **4b** sont situées à quelque distance au-delà du crochet **2**.

On soulignera ici que, grâce au procédé qui vient d'être décrit, la face interne du prolongement **1a** n'est pas affectée par la présence des pattes **4a** et **4b** et qu'il n'y a donc aucun risque d'endommager la surface extérieure de l'objet à serrer.

**Revendications**

1. Collier de serrage constitué par une bande de métal **(1)** enroulée sur elle-même, des moyens complémentaires de serrage et d'agrafage **(2-3)** étant disposés au voisinage des extrémités de la bande, cependant que le brin intérieur de la bande présente un prolongement **(1a)** s'étendant, avant le serrage du collier, au-dessous du brin extérieur et au-delà du moyen d'agrafage qu'il comporte, caractérisé en ce que ledit prolongement présente sur ses bords longitudinaux deux pattes **(4a-4b)**, en regard l'une de l'autre, formant corps avec ledit prolongement, faisant saillie vers l'extérieur du collier et étant serrées sur les bords longitudinaux du brin extérieur de la bande avant la fermeture du collier.

2. Procédé pour la fabrication d'un collier de serrage selon la revendication 1, caractérisé en ce que deux protubérances latérales **(4'a-4'b)** sont tout d'abord obtenues par matriçage dans l'épaisseur du prolongement **(1a)** et par refoulement du métal, les deux protubérances latérales ainsi formées étant ensuite cambrées et, après enroulement de la bande, serrées sur le brin extérieur au-delà du moyen d'agrafage qu'il comporte.

fig.1

fig.2

fig.3

Office européen
des brevets

**RAPPORT DE RECHERCHE EUROPEENNE**

Numero de la demande

EP 91 40 1509

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | DE-C-3 122 656 (RASMUSSEN GMBH) * Colonne 2, dernier paragraphe - colonne 3, paragraphe 1; figure 1 * | 1 | F 16 L 33/02 |
| A | AT-B- 350 344 (WORINGER) * Page 4, ligne 4 - ligne 9; figures 1,4 * | 1 | |

**DOMAINES TECHNIQUES RECHERCHES (Int. Cl.5)**

F 16 L

Le présent rapport a été établi pour toutes les revendications

| Lieu de la recherche | Date d'achèvement de la recherche | Examinateur |
|---|---|---|
| LA HAYE | 17-09-1991 | HUBEAU M.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                             
& : membre de la même famille, document correspondant

EPO FORM 1503 03.82 (P0402)